# EUROPÄISCHE PATENTSCHRIFT

(11) **EP 1 852 240 B1**
(45) Veröffentlichungstag und Bekanntmachung des Hinweises auf die Patenterteilung: **16.12.2009**
(21) Anmeldenummer: 07107161.7
(22) Anmeldetag: 27.04.2007
(51) Int. Cl.: B29C 55/30, B29C 67/00, B29D 7/01, C08J 3/18

(54) **Kaltumformung von PVC, PP und ABS- oder MABS-haltigen Polymeren**
Cold-forming of PVC, PP and ABS- or MABS-containing polymers
Formage à froid de polymères contenant du PVC, PP, ou de l'ABS ou du MABS

(30) Priorität: 02.05.2006 EP 06113381
(43) Veröffentlichungstag der Anmeldung: 07.11.2007
(73) Patentinhaber: BASF SE, 67056 Ludwigshafen (DE); MKT Gebrüder Eschbach GmbH, 99885 Ohrdruff (FR)
(72) Erfinder: Schade, Christian, 67063, Ludwigshafen (DE); Renner, Hans-Jürgen, 67141, Neuhofen (DE); Stein, Marco, 99887, Hohenkirchen (DE)
(74) Vertreter: Huhn, Michael

(56) Entgegenhaltungen:
- WO-A-97/20681
- US-A- 3 714 320
- US-A- 3 965 230
- VAN MELICK H G H ET. AL.: "Kinetics of ageing and re-embrittlement of mechanically rejuvenated polystyrene" POLYMER, ELSEVIER SCIENCE PUBLISHERS B.V. GB, Bd. 44, Nr. 4, Februar 2003 (2003-02), Seiten 1171-1179, XP002436529

## Beschreibung

Die vorliegende Patentanmeldung bezieht sich auf ein Verfahren zum Verkleiden von Möbelkanten mit PVC, PP und ABS- oder MABS-haltigen Polymeren durch Überführen der Polymere in einen Zustand duktiler Verformbarkeit durch Krafteinwirkung unterhalb ihrer jeweiligen Glasübergangstemperatur.

Styrolhaltige Polymere werden in einer Vielzahl von Anwendungen z.B. in der Möbelindustrie oder in der Automobilindustrie eingesetzt. Insbesondere können styrolhaltige Folien zum Schutz und zur Veredelung von Oberflächen dienen, beispielsweise lassen sich Möbel, Türen oder Bilderrahmen, statt eine Lackierung zu erhalten, mit einer Kunststofffolie überziehen (beispielsweise PermaSkin^{®}-Verfahren der Anmelderin). Kunststofffolien werden auch zur Herstellung von Karosserieteilen verwendet (PFM^{®} = paintless-film-molding der Anmelderin). Ein weiteres Beispiel aus dem Möbelbau ist die Verkleidung von Möbelkanten mit Kantenumleimern, wobei für die Kantenumleimer häufig ABS- oder MABS-haltige Polymere bzw. PVC verwendet werden.

Nach bisherigen Verfahren werden die Folien dabei unterhalb der Glasübergangstemperatur (T_{G}) der entsprechenden Polymere verarbeitet. Die Folien werden dabei so verformt, dass sie sich der Form des Untergrundes anpassen. Je nach mechanischer Beanspruchung bzw. Krafteinwirkung, d.h. Biegewinkel bzw. Biegeradius, kann bei der Verformung sogenannter Weißbruch auftreten. Dabei bilden sich Bereiche mit kleinen Haarrissen ("crazes"), in denen sich das Polymer ungenügend duktil verformt hat. Diese Crazes sind ein Hinweis auf beginnendes Materialversagen. Einer weiteren Belastung oder dem Angriff eines spannungsrissauslösenden Mediums können solche Zonen im Allgemeinen weniger widerstehen.

Im Rahmen der vorliegenden Erfindung wird unter Duktilität bzw. duktiler Verformbarkeit der Polymere die plastische Verformbarkeit der Polymere ohne das Auftreten von Weißbruch verstanden. Duktile Verformbarkeit bzw. Duktilität bedeutet, dass sich ein Stoff unter Krafteinwirkung ohne das Auftreten von Störungen oder Bruch plastisch verformen lässt.

Bei eigentlich transparenten Polymeren zeigt sich Weißbruchverhalten im Auftreten von trüben Bereichen, bei eingefärbten Folien werden weiße Flecken sichtbar. Diese Fehlstellen sind aus ästhetischen Gründen unerwünscht, insbesondere in einem designorientierten Zweig wie dem Möbelbau, zumal sie beginnendes Materialversagen anzeigen. Üblicherweise werden die Fehlstellen durch Erwärmen beseitigt, dies kann mittels Bestrahlung im Infrarotbereich geschehen. Durch mangelnde Duktilität kann des Weiteren der Glanz von Polymeren mit starkem Oberflächenglanz bei Umformungsprozessen beeinträchtigt werden. Auch hierbei handelt es sich um einen unerwünschten und störenden optischen Makel.

Das Deformationsverhalten von Polystyrol unterhalb von T_{G} wurde von Meijer et al. untersucht (Polymer 42 (2001) 1271; Polymer 44 (2003) 1171). Sie konnten zeigen, dass sich Polystyrol nach vorheriger mechanischer Beanspruchung für kurze Zeit duktil verformen lässt. Dabei handelt es sich um einen temporären Effekt. Die mechanische Beanspruchung bestand in Walzen der Probekörper, das zu einer Dickereduktion um 32 % führte. Bei sich anschließenden Kompressionsversuchen war die Schererweichung, die als Ursache für das Auftreten von Fehlstellen bei Verformung genannt wird, bei den vorbehandelten Proben im Gegensatz zu den unbehandelten beziehungsweise gealterten Proben fast völlig verschwunden. Bei Zug-Dehnungsversuchen konnten die vorbehandelten Proben homogen um ca. 20 % gestreckt werden, bis Reißen eintrat, unbehandelte oder wieder gealterte Proben rissen bei etwa 2 % Dehnung, noch bevor die Fließgrenze erreicht wurde. Um duktiles Fließen handelt es sich, wenn die Proben um mindestens 6 % verformt werden können.

Stäbe aus amorphem Homopolystyrol ("Standard-Polystyrol") lassen sich generell erst befriedigend umformen, nachdem bei der Vorbehandlung die Walzen auf bestimmte Temperaturen, häufig etwa 40°C, vorgeheizt und die Walzendrehzahl auf 0,5 s⁻¹ abgesenkt wurde. Unmittelbar nach dem Walzen der Schulterstäbe ist prinzipiell eine weitgehende Verformung möglich, beispielsweise durch spiralartiges mehrfaches Verdrehen. Die Probekörper sind generell nach der Umformung jedoch optisch trüb und zeigen zahlreiche Einspleißstellen. Die trüben Bereiche stellen Weißbruch dar und weisen neben den Einspleißstellen darauf hin, dass die Probekörper nicht ausreichend duktil verformt wurden. Es kann gesagt werden, dass sich dieses Verfahren somit nicht für die Umformung von Standard-Polystyrol bei Temperaturen unterhalb seiner Glasübergangstemperatur eignet.

In US 3,714,320 wird Polypropylen beschrieben, das mittels Kompressionsbeanspruchung im festen Zustand vorbehandelt wird, bis kalter Fluss austritt. Das derart behandelte Polypropylen zeigt unterhalb von 40 °C duktiles Verhalten. Weißbruch tritt erst oberhalb der zweiten Streckgrenze auf.

Aufgabe der vorliegenden Erfindung ist die Bereitstellung eines Verfahrens zur Überführung PVC, PP und ABS- oder MABS-haltigen Polymeren in einen Zustand duktiler Verformbarkeit, so dass ein weißbruchfreies Verformen der Polymere möglich ist. Werden die Polymere nach Überführung in den duktil verformbaren Zustand weiterverarbeitet, sollen sie keine Fehlstellen nach der Weiterverarbeitung zeigen. Vorzugsweise soll das Verfahren bei niedrigen Temperaturen, insbesondere unterhalb der jeweiligen Glasübergangstemperatur durchführbar sein.

Diese Aufgabe wird gelöst durch ein Verfahren zum Verkleiden von Möbelkanten mit Kantenumleimern aus PVC, PP und ABS- oder MABS-haltigen Polymeren durch Überführung der Polymere in einen Zustand duktiler Verformbarkeit durch das Einwirken einer Kraft auf die Polymere unterhalb ihrer jeweiligen Glasübergangstemperatur, **dadurch gekennzeichnet, dass** der Kantenumleimer nach weniger als 30 Min. nach der Krafteinwirkung auf einer Möbelkante aufgebracht wird

Es wurde überraschend gefunden, dass durch die Krafteinwirkung die erfindungsgemäß verwendeten Polymere duktil verformbar werden, d.h., sie können weißbruchfrei verformt werden. Dies hat zur Folge, dass - nach vorheriger Krafteinwirkung - transparente Polymere unter Beibehaltung ihrer vollen Transparenz umgeformt werden können, also ohne Auftreten optisch störender, trüber Fehlstellen. Gefärbte Polymere können ohne Hervorrufen von hellen oder weißen Flecken und Polymere mit hohem Oberflächenglanz ohne Verlust ihres Glanzes umgeformt werden.

Der Weißbruch kann durch optische Verfahren und (elektronen)mikroskopische Verfahren festgestellt werden. Im Allgemeinen wird das Polymer jedoch visuell untersucht werden, da das menschliche Auge empfindlich genug ist. Bei transparenten Produkten erscheint sogenannte Haze, schließlich stellt sich eine Weißtrübung ein. Bei farbigen Produkten wird durch die Zunahme des Streulichtanteils die entsprechende Stelle heller. Weiße Produkte verlieren an Glanz.

Obwohl die Quantifizierung nur über optisch beziehungsweise (elektronen)mikroskopische Verfahren möglich ist, reicht die visuelle Überprüfung aus. Im Rahmen der vorliegenden Erfindung bezeichnet der Begriff "weißbruchfrei" daher den Zustand, in dem das nach dem Verfahren erhaltene Polymer keinen Weißbruch aufweist, der vom Fachmann durch visuelle Überprüfung festgestellt werden kann oder der für die geplante Anwendung als nicht störend klassifiziert wird.

Der durch die Krafteinwirkung hervorgerufene Zustand duktiler Verformbarkeit ist nicht von Dauer und die duktile Verformbarkeit lässt mit fortschreitender Zeit nach. Der genaue Zeitraum der duktilen Verformbarkeit hängt von dem verwendeten Polymer oder Polymergemisch sowie der Intensität der Krafteinwirkung ab.

PVC oder PP werden durch Einwirken einer Kraft unterhalb ihrer Glasübergangstemperatur in einen Zustand duktiler Verformbarkeit überführt.

Mit PP wird in der vorliegenden Erfindung Polypropylen und mit PVC Polyvinylchlorid bezeichnet. Bei dem erfindungsgemäß eingesetzten PVC handelt es sich um PVC, das keine oder nur in geringen Mengen handelsübliche oder dem Fachmann bekannte Weichmacher enthält, dieses PVC wird auch Hart-PVC oder PVC hart genannt.

ABS- und MABS-haltige Polymere werden durch Einwirken einer Kraft unterhalb ihrer Glasübergangstemperatur in einen Zustand duktiler Verformbarkeit überführt.

Unter ABS-haltigen Polymeren werden in der vorliegenden Erfindung mindestens Styrol, Butadien und Acrylnitril enthaltende Copolymere und Polymermischungen verstanden. Die Styrol, Butadien und Acrylnitril enthaltenden Copolymere und Polymermischungen können weitere, dem Fachmann bekannte Monomersorten als Monomerkomponenten enthalten.

Unter MABS-haltigen Polymeren werden in der vorliegenden Erfindung Copolymere und Polymermischungen verstanden, die als Monomerkomponenten Methylmethacrylat, Acrylnitril, Butadien und Styrol enthalten. Die MABS-haltigen Polymere können weitere, dem Fachmann bekannte Monomersorten als Monomerkomponenten enthalten.

Copolymere können statistische Copolymere, Blockcopolymere aus zwei, drei und mehr Blöcken, Sterncopolymere, Pfropfcopolymere oder Kern-Schale-Copolymere mit zwei, drei und mehr Schichten sein.

Als Polymermischungen werden Mischungen aus Homopolymeren, Copolymeren sowie aus Co- und Homopolymeren bezeichnet. Die Polymermischungen können zwei, drei, vier und mehr Polymerkomponenten enthalten. Die Polymermischungen können homogen oder heterogen gemischt vorliegen.

Die erfindungsgemäß verwendeten Polymere können weitere übliche, dem Fachmann bekannte Zusätze wie Verarbeitungshilfsmittel, Füllstoffe, Farbpigmente und Farbstoffe, Antioxidantien, Thermostabilisatoren, Antistatika, Flammschutzmittel und ähnliche enthalten.

Als Styrol wird in der vorliegenden Erfindung Styrol als solches sowie die dem Fachmann bekannten Styrolderivate bezeichnet, wie mit 1 bis 8 C-Atome enthaltenden Alkylresten substituiertes Styrol, wie Vinyltoluole, darunter α-Methylstyrol, α-Chlorstyrol sowie Mischungen davon.

Als weitere Monomerkomponente können übliche, dem Fachmann bekannten Monomere verwendet werden, beispielsweise aliphatische, aromatische und araliphatische Ester der Acrylsäure und Methacrylsäure, Methacrylnitril, Maleininsäureanhydrid, Maleinimid, Diene wie Isopren und olefinische Monomere sowie Mischungen davon.

Das in der vorliegenden Erfindung verwendete ABS enthält vorzugsweise zwischen 5 und 45 Gew.-% Acrylnitril, zwischen 1 und 50 Gew.-% Butadien und zwischen 5 und 94 Gew.-% Styrol sowie gegebenenfalls ein oder mehrere der weiter oben genannten Monomerkomponenten. Es kann nach den dem Fachmann bekannten Verfahren beispielsweise im Bulk oder in Lösung, Suspension oder Emulsion polymerisiert werden. Das ABS kann auch durch Mischen der einzelnen Polymere oder Copolymere hergestellt werden.

Das in der vorliegenden Erfindung verwendete MABS enthält vorzugsweise zwischen 1 und 60 Gew.-% Methylmethacrylat, zwischen 1 und 35 Gew.-% Acrylnitril, zwischen 1 und 50 Gew.-% Butadien sowie zwischen 5 und 90 Gew.-% Styrol sowie gegebenenfalls ein oder mehrere der weiter oben genannten Monomerkomponenten. Es kann nach den üblichen, dem Fachmann bekannten Verfahren hergestellt werden.

Bevorzugt werden die Copolymere und Polymermischungen ABS und MABS ohne weitere Monomerkomponente verwendet. Auch in diesem Fall gelten die oben stehenden Mengenangaben für die einzelnen Monomerkomponenten.

Die erfindungsgemäße Krafteinwirkung auf PVC, PP sowie die ABS- oder MABS-haltigen Polymere kann durch Pressen, Biegen, Dehnen, Kneten, allgemein Einwirken von Scherfeldern, Verdrillen oder Walzen geschehen, bevorzugt werden die Polymere mittels Walzen in den Zustand duktiler Verformbarkeit überführt. Für die gemäß dieser Erfindung eingesetzten verschiedenen Polymere sowie die verschiedenen Arten der Krafteinwirkung werden die für das erfindungsgemäße Verfahren benötigten Parameter wie Dauer und Intensität der Krafteinwirkung durch geeignete Vorversuche festgestellt. Dies bedeutet, dass je nach gewähltem Polymer und gewählter Art der Krafteinwirkung bei verschiedenen Einstellungen Tests durchgeführt werden, bis die darauf folgende Umformung des Polymers weißbruchfrei möglich ist.

Bei Krafteinwirkung durch Walzen werden die Walzvorgänge generell durch Wahl der Spaltdicke und der Walzendrehzahl eingestellt. Die genau benötigten Einstellungen können durch Vorversuche ermittelt werden. Bevorzugt wird der Spalt so gewählt, dass das Walzen zu einer Dickereduktion von mindestens 5 %, besonders bevorzugt von mindestens 10 %, ganz besonders bevorzugt von mindestens 25 % führt. Die Durchlaufgeschwindigkeit des Polymers liegt zwischen 0.1 und 20 m/min, bevorzugt zwischen 1 und 15 m/min, besonders bevorzugt zwischen 5 und 10 m/min. Durchlaufgeschwindigkeit und Walzendrehzahl lassen sich mit Hilfe des Walzendurchmessers ineinander umrechnen. Die Walzendrehzahl wird in s⁻¹ oder der dazu äquivalenten Einheit Hz angeben.

Das Walzen wird bevorzugt mittels eines Kalander durchgeführt, der oder dessen Walzen temperierbar sein können.

Die Überführung in den Zustand duktiler Verformbarkeit durch Krafteinwirkung wird üblicherweise bei Raumtemperatur durchgeführt. Sie kann jedoch auch bei leicht erhöhten Temperaturen vorgenommen werden. Die Temperatur soll dabei die Glasübergangstemperatur des jeweiligen Polymeren nicht überschreiten. Bei Polymermischungen können die einzelnen Komponenten unterschiedliche Glasübergangstemperaturen aufweisen, dies ist beispielsweise bei den mittels Kautschuk modifizierten Polymermischungen der Fall; die als Kautschukmodifizierer verwendeten Polymere besitzen zum Teil Glasübergangstemperatur von 0°C und niedriger. Wenn heterogene, also in mehreren Phasen vorliegende Polymermischungen zwei Glasübergangstemperaturen zeigen, wird sich in der vorliegenden Erfindung auf die Glasübergangstemperatur des Polymers, Copolymers oder der Polymermischung bezogen, das die Matrixphase bildet.

Bevorzugt wird die Krafteinwirkung mindestens 10°C, besonders bevorzugt 40°, ganz besonders bevorzugt mindestens 70°C unterhalb von T_{G} durchgeführt

Im Anschluss an die Überführung durch Krafteinwirkung der ABS- oder MABS-haltigen Polymere, des PP oder des PVC in einen Zustand der duktilen Verformbarkeit findet eine Umformung der Polymere statt. Nach dem erfindungsgemäßen Verfahren wird der Zeitraum zwischen Krafteinwirkung und Umformung der Polymere so gewählt, dass sich die Polymere noch duktil verformen lassen. Der mögliche zeitliche Abstand zwischen Krafteinwirkung und Umformung kann durch geeignete Vorversuche ermittelt werden, vorzugsweise werden die Polymere direkt im Anschluss an die Krafteinwirkung umgeformt. Die Umformung wird weniger als 30 min nach der Krafteinwirkung, bevorzugt weniger als 5 min danach erfolgen.

Die Umformung kann beispielsweise mittels dem Fachmann bekannten Verfahren wie Kalandrieren, Biegen, Prägen und Ziehverfahren wie Tiefziehen durchgeführt werden.

Die erfindungsgemäß mittels Krafteinwirkung in den Zustand duktiler Verformbarkeit überführten Polymere lassen sich verformen, ohne dass dabei Fehlstellen in den Polymeren auftreten, und zeichnen sich durch weißbruchfreies Biegeverhalten aus, d.h. bei transparenten Polymeren treten beim Biegen keine trüben Stellen auf und eingefärbte Polymere lassen sich ohne das Entstehen von weißen Flecken verformen. Weiterhin bleibt der Oberflächenglanz der Polymere erhalten.

Die nach dem erfindungsgemäßen Verfahren in den duktilen Zustand überführten Polymere können beispielsweise in Form von Folien in vielen Anwendungen verarbeitet werden, wie dem Perma-Skin-Verfahren; Möbel, Türen, Fenster oder Bilderrahmen können mit einem Polymerüberzug versehen werden. Aufgrund der weißbruchfreien Weiterverarbeitung eignen sich die erfindungsgemäß vorbehandelten Polymere für den Einsatz in designorientierten Bereichen, in denen großer Wert auf den optischen Eindruck der Produkte gelegt wird. Dazu gehört z.B. die Möbelindustrie, die Automobilindustrie oder die Verpackungsindustrie. Das erfindungsgemäße Verfahren eröffnet eine größere Freiheit in Formwahl und Design beim Einsatz der Polymere.

Die nach dem erfindungsgemäßen Verfahren auf die Möbelkanten aufgebrachten Kantenumleimer zeigen deutlich weniger Weißbruch, auch lassen sich Kanten mit stärkeren Rundungen, d.h. kleineren Biegeradien ohne störende, von Weißbruch herrührende Flecken oder Fehlstellen als nach den herkömmlichen Verfahren mit PVC, PP und ABS- oder MABS-haltigen Polymeren umleimen.

Insbesondere eignet sich das vorliegende Verfahren zur direkten Integration in Kantenumleimmaschinen, indem auf den Kantenumleimer vor dem Aufbringen auf die Möbelkante mit Hilfe von zwei in die Maschine integrierte Walzen eine Kraft ausgeübt wird und dieser auf diese Weise in einen duktil verformbaren Zustand überführt wird und direkt anschließend auf die Möbelkante aufgebracht wird.

Nach dem erfindungsgemäßen Verfahren können aus den Polymeren, insbesondere in Form von Folien, auch dreidimensionale Körper geformt werden. Dazu zählen beispielsweise Verpackungen sowohl dekorativer als auch schützender Natur für unterschiedliche Güter wie Nahrungsmittel, Kleinteile, Kosmetika, Kleingeräte, Zwischenverpackungen zu Schutz gegen Transportschäden, Einsätze zur Aufbewahrung von Kleinteilen, Spielzeug, Geschirr aus Kunststoff oder Hohlkörper wie Blumenkästen. Die aus den erfindungsgemäß vorbehandelten Polymeren hergestellten Formen sind nicht in ihrer Größe begrenzt. Auch große Gebilde lassen sich aus den duktilen Polymeren formen, beispielsweise Sandkästen.

Auch eignet sich das Verfahren für extrudierte Polymere oder Polymermischungen, die anschließend an die Extrusion noch einem Formgebungsverfahren unterworfen werden. Beispielsweise lassen sich Profile und Halbzeuge wie Rohre nach dem erfindungsgemäßen Verfahren verarbeiten.

Im Folgenden sollen die erfindungsgemäßen Verfahren anhand von Beispielen erläutert werden.

### Beispiele

Die Beispiele 1 bis 3 wurden anhand von 4 mm dicken, spritzgegossenen Schulterstäben durchgeführt, in Beispiel 4 wurden Folien verschiedener Dicke verwendet. Der Walzenabstand betrug 2 mm, soweit nicht anders angegeben.

### Beispiel 1 (Vergleich):

Standard-Polystyrol mit einer mittleren Molekülmasse von 275.000 D, (nicht erfindungsgemäß):
A) Walzen bei Raumtemperatur bei einer Walzendrehzahl von 0,2 s⁻¹:
   Die Kaltwalzung führt in den meisten Fällen zu Bruch und zerspleißenden Schulterstäben.
B) Walzen bei 40°C und einer Walzendrehzahl von 0,2 s⁻¹:
   Unmittelbar nach dem Walzen der Schulterstäbe war eine weitergehende Verformung möglich, beispielsweise durch spiralartiges mehrfaches Verdrehen. Die Probekörper waren nach der Umformung jedoch optisch trüb und zeigten zahlreiche Einspleißstellen.
C) Walzen bei 40°C und einer Walzendrehzahl 0,2 s⁻¹, 1 min. Ruhezeit:
   Keine Verdrillung ohne Bruch mehr möglich.

### Beispiel 2:

Umformung von ABS mit einer mittleren Molekülmasse von 130.000 g/mol, einem Styrolgehalt von 58 %, einem Butadiengehalt von 24 % und einem Acrylnitrilgehalt von 17 %.
A) Verformung ohne Vorbehandlung durch Walzen (nicht erfindungsgemäß):
   Verdrehen der Probekörper führte zu Bruch, Rissbildung oder starkem Weißbruchverhalten.
B) Vorbehandlung der Proben durch Walzen bei Raumtemperatur und Walzendrehzahlen von 0,2 s⁻¹ (erfindungsgemäß):

Die Probekörper ließen sich sehr leicht duktil verformen, zum Beispiel durch spiralartiges mehrfaches Verdrehen. An den zum Teil stark verdrehten Probekörpern war kein Weißbruchverhalten zu entdecken. Ein Einspleißen war nicht zu beobachten. Nach der Umformung zeigten die Probekörper trübungsfreie Transparenz.

### Beispiel 3:

Untersuchung des Einflusses des Walzenabstandes anhand von ABS aus Beispiel 2, Walzenabstand = 3,5 mm bei Raumtemperatur und einer Walzendrehzahl von 0.2 s⁻¹:
Die Schulterstäbe ließen sich duktil und weißbruchfrei verformen.

### Beispiel 4

Untersuchung des Weißbruchverhaltens von gefärbten Folien aus ABS gemäß Beispiel 2 mit den in den Tabellen 1-5 angegebenen Temperaturen und Einstellungen des Walzenspalts bei Durchlaufgeschwindigkeiten der Folien von 5 bis 10 m/min. Der Durchmesser der Walze betrug 500 mm. In der Spalte "Dicke" ist die Dicke der Folie vor dem Walzen, in der Spalte "Dicke nach dem Walzen" die Foliendicke nach dem Walzen angegeben. Das Weißbruchverhalten wurde qualitativ beurteilt und in drei Kategorien eingeteilt: "Schlecht" bedeutet Auftreten von Weißbruch, "gut" marginales, kaum sichtbares Auftreten von Weißbruch und "sehr gut" heißt, Weißbruch tritt nicht auf.

**Tab.1 1mm Rot**

| | **Dicke** | **Walzenspalt** | **Walzen-temperatur** | **Dicke nach dem Walzen** | **Weißbruchverhalten** |
|---|---|---|---|---|---|
| **1.** | 1 mm | 0,8 mm | 60°C /40°C / 30°C | 1 mm | schlecht |
| **2.** | 1 mm | 0,6 mm | 60°C /40°C / 30°C | 1mm | schlecht |
| **3.** | 1 mm | 0,5 mm | 60°C /40°C / 30°C | 1 mm | schlecht |
| **4.** | 1 mm | 0,4 mm | 60°C /40°C / 30°C | 0,95 mm | gut |
| **5.** | 1 mm | 0,3 mm | 60°C /40°C / 30°C | 0,9 mm | sehr gut |

**Tab. 2 2,75 mm Rot**

| | **Dicke** | **Walzenspalt** | **Walzen-temperatur** | **Dicke nach dem Walzen** | **Weißbruchverhalten** |
|---|---|---|---|---|---|
| **1.** | 2,75 mm | 2,5 mm | 60°C /40°C / 30°C | 2,75 mm | schlecht |
| **2.** | 2,75 mm | 2,2 mm | 60°C /40°C / 30°C | 2,75 mm | schlecht |
| **3.** | 2,75 mm | 1,8 mm | 60°C /40°C / 30°C | 2,6 mm | schlecht |
| **4.** | 2,75 mm | 1,5 mm | 60°C /40°C / 30°C | 2,54 mm | gut |
| **5.** | 2,75 mm | 1,3 mm | 60°C /40°C / 30°C | 2,2 mm | sehr gut |

**Tab. 3 2,9 mm blau**

| | **Dicke** | **Walzenspalt** | **Walzen-temperatur** | **Dicke nach dem Walzen** | **Weißbruchverhalten** |
|---|---|---|---|---|---|
| **1.** | 2,9 mm | 2,2 mm | 60°C /40°C / 30°C | 2,9 mm | schlecht |
| **2.** | 2,9 mm | 1,8 mm | 60°C /40°C / 30°C | 2,9 mm | schlecht |
| **3.** | 2,9 mm | 1,5 mm | 60°C /40°C / 30°C | 2,75 mm | schlecht |
| **4.** | 2,9 mm | 1,3 mm | 60°C /40°C / 30°C | 2,54 mm | gut |
| **5.** | 2,9 mm | 1,5 mm | 60°C /40°C / 30°C | 2,4 mm | sehr gut |

**Tab. 4 2 mm Eisblau, lackiert Lack löst sich**

| | **Dicke** | **Walzenspalt** | **Walzen-temperatur** | **Dicke nach dem Walzen** | **Weißbruchverhalten** |
|---|---|---|---|---|---|
| **1.** | 2,0 mm | 1,8 mm | 60°C /40°C / 30°C | 2,0 mm | schlecht |
| **2.** | 2,0 mm | 1,6 mm | 60°C /40°C / 30°C | 2,0 mm | schlecht |
| **3.** | 2,0 mm | 1,4 mm | 60°C /40°C / 30°C | 1,75 mm | schlecht |
| **4.** | 2,0 mm | 1,1 mm | 60°C /40°C / 30°C | 1,70 mm | gut |
| **5.** | 2,0 mm | 0,9 mm | 60°C /40°C / 30°C | 1,65 mm | sehr gut |

**Tab. 5 2 mm grün**

| | **Dicke** | **Walzenspalt** | **Walzen-temperatur** | **Dicke nach dem Walzen** | **Weißbruchverhalten** |
|---|---|---|---|---|---|
| **1.** | 2,0 mm | 1,8 mm | 60°C /40°C / 30°C | 2,0 mm | schlecht |
| **2.** | 2,0 mm | 1,6 mm | 60°C /40°C / 30°C | 2,0 mm | schlecht |
| **3.** | 2,0 mm | 1,4 mm | 60°C /40°C / 30°C | 1,75 mm | schlecht |
| **4.** | 2,0 mm | 1,1 mm | 60°C /40°C / 30°C | 1,70 mm | gut |
| **5.** | 2,0 mm | 0,9 mm | 60°C /40°C / 30°C | 1,65 mm | sehr gut |

## Patentansprüche

1. Verfahren zum Verkleiden von Möbelkanten mit Kantenumleimem aus PVC, PP und ABS- oder MABS-haltigen Polymeren durch Überführen der Polymere in einen Zustand duktiler Verformbarkeit durch das Einwirken einer Kraft auf die Polymere unterhalb ihrer jeweiligen Glasübergangstemperatur **dadurch gekennzeichnet, dass** der Kantenumleimer nach weniger als 30 min nach der Krafteinwirkung auf einer Möbelkante aufgebracht wird.

2. Verfahren nach Anspruch 1, **dadurch gekennzeichnet, dass** der Kantenumleimer nach weniger als 5 min nach der Krafteinwirkung auf einer Möbelkante aufgebracht wird.

3. Verfahren nach Anspruch 1 oder 2, **dadurch gekennzeichnet, dass** die Krafteinwirkung in einem derartigen Ausmaß durchgeführt wird, das Polymer unterhalb seiner Glasübergangstemperatur weißbruchfrei verformt werden kann.

4. Verfahren nach einem der Ansprüche 1 bis 3, **dadurch gekennzeichnet, dass** die Krafteinwirkung durch Walzen geschieht.

5. Verfahren nach Anspruch 4, **dadurch gekennzeichnet, dass** das Walzen zu einer Dickereduktion von mindestens 5 % führt.

6. Verfahren nach Anspruch 4 oder 5, **dadurch gekennzeichnet, dass** das Walzen zu einer Dickereduktion von mindestens 10 % führt.

7. Verfahren nach einem der Ansprüche 4 bis 6, **dadurch gekennzeichnet, dass** das Walzen zu einer Dickereduktion von mindestens 25 % führt.

8. Verfahren nach einem der Ansprüche 1 bis 7, **dadurch gekennzeichnet, dass** die Polymere gewählt sind aus der Gruppe der ABS- oder MABS-haltigen Polymere, Copolymere und Polymermischungen.

9. Verfahren nach Anspruch 8 **dadurch gekennzeichnet, dass** es sich bei den Polymeren um ABS oder MABS ohne weitere Monomerkomponente handelt.

10. Verfahren nach Anspruch 8 **dadurch gekennzeichnet, dass** die Polymere gewählt sind aus der Gruppe PP und PVC.

11. Verfahren nach einem der Ansprüche 1 bis 10, **dadurch gekennzeichnet, dass** die Vorbehandlung und die Aufbringung der Möbelkante in derselben Vorrichtung direkt nacheinander erfolgen.

12. Möbel, Möbelteile und Holzbauteile, deren Kanten nach einem Verfahren der Ansprüche 1 bis 11 mit Kantenumleimer verkleidet wurden.

## Claims

1. A process for the cladding of edges of furniture with edgebanding products composed of PVC, PP, and of polymers comprising ABS or comprising MABS, via conversion of the polymers to a condition of ductile deformability through the action of a force on the polymers below their respective glass transition temperature, which comprises applying the edgebanding product on an edge of furniture after less than 30 minutes after the action of the force.

2. The process according to claim 1, wherein the edgebanding product is applied on an edge of furniture after less than 5 minutes after the action of the force.

3. The process according to claim 1 or 2, wherein the extent of the action of the force is such that the polymer can be deformed below its glass transition temperature without stress whitening.

4. The process according to any of claims 1 to 3, wherein the action of the force takes place via rolls.

5. The process according to claim 4, wherein the rolling process leads to a thickness reduction of at least 5%.

6. The process according to claim 4 or 5, wherein the rolling process leads to a thickness reduction of at least 10%.

7. The process according to any of claims 4 to 6, wherein the rolling process leads to a thickness reduction of at least 25%.

8. The process according to any of claims 1 to 7, wherein the polymers have been selected from the group of the polymer mixtures and copolymers and polymers comprising ABS or comprising MABS.

9. The process according to claim 8, wherein the polymers are ABS or MABS without any other monomer component.

10. The process according to claim 8, wherein the polymers have been selected from the group of PP and PVC.

11. The process according to any of claims 1 to 10, wherein the pretreatment and the application to the edge of the item of furniture take place in the same apparatus in direct succession.

12. An item of furniture, a furniture part, or a wooden component, edges of which have been clad according to a process of claims 1 to 11 with edgebanding product.

## Revendications

1. Procédé pour habiller les bords de meubles avec des chants en PVC, PP et des polymères contenant de l'ABS ou du MABS par transformation des polymères dans un état de déformabilité ductile en exerçant une force sur les polymères au-dessous de leur température de transition vitreuse, **caractérisé en ce que** le chant est appliqué sur un bord d'un meuble moins de 30 minutes après avoir exercé la force.

2. Procédé selon la revendication 1, **caractérisé en ce que** le chant est appliqué sur un bord d'un meuble moins de 5 minutes après avoir exercé la force.

3. Procédé selon la revendication 1 ou 2, **caractérisé en ce que** la force est exercée dans une mesure telle que le polymère peut être déformé, au-dessous de sa température de transition vitreuse, sans former de rupture blanche.

4. Procédé selon l'une quelconque des revendications 1 à 3, **caractérisé en ce que** la force est exercée par laminage.

5. Procédé selon la revendication 4, **caractérisé en ce que** le laminage conduit à une réduction de l'épaisseur d'au moins 5%.

6. Procédé selon la revendication 4 ou 5, **caractérisé en ce que** le laminage conduit à une réduction de l'épaisseur d'au moins 10%.

7. Procédé selon l'une quelconque des revendications 4 à 6, **caractérisé en ce que** le laminage conduit à une réduction de l'épaisseur d'au moins 25%.

8. Procédé selon l'une quelconque des revendications 1 à 7, **caractérisé en ce que** les polymères sont choisis dans le groupe des polymères, copolymères et mélanges de polymères contenant de l'ABS ou du MABS.

9. Procédé selon la revendication 8, **caractérisé en ce qu'**il s'agit, pour les polymères, d'ABS ou de MABS sans autre composant monomère.

10. Procédé selon la revendication 8, **caractérisé en ce que** les polymères sont choisis dans le groupe formé par le PP et le PVC.

11. Procédé selon l'une quelconque des revendications 1 à 10, **caractérisé en ce que** le prétraitement et l'application des bords des meubles sont réalisés de manière directement consécutive dans le même dispositif.

12. Meubles, parties de meubles et pièces en bois, dont les bords ont été habillés selon un procédé selon les revendications 1 à 11 avec un chant.
